# EUROPEAN PATENT APPLICATION

(11) **EP 2 241 172 A1**
(43) Date of publication of application: **20.10.2010**
(21) Application number: 10003901.5
(22) Date of filing: 13.04.2010
(51) Int. Cl.: A01D 34/74

(54) **Lawn-mower**

(30) Priority: 16.04.2009 IT FI20090078
(71) Applicant: Bernini, Fabrizio, 52021 Bucine (AR) (IT)
(72) Inventor: Bernini, Fabrizio, 52021 Bucine (AR) (IT)
(74) Representative: Lanzoni, Luciano

(57) **Abstract**

A lawn-mower comprises a box-shaped body (2) exhibiting a plurality of driving wheels (3) associated at the bottom with the same body (2) to move it along a grass surface to be cut; means for moving the driving wheels (3) disposed inside the box-shaped body (2), and a plurality of cutting members (4) associated at the bottom with the lawn-mower (1). At least one of the cutting members (4) is movable about at least one hinge axis (B) to allow the cutting members (4) to follow the outline of the grass surface and to keep constant the height of cut.

## Description

The object of the present invention is a lawn-mower.

In particular, the present invention refers to a lawn-mower for domestic use which is either of manual or automatic type, that is, able to operate autonomously over a grass surface to be cut.

In general, the lawn-mowers are provided with a box-shaped body with at least one front wheel and two rear wheels.

Usually, in case of a manually operated lawn-mower, all the wheels are idle and the lawn-mower is driven only by the user. In case of an automatic lawn-mower, this is also provided with an electric motor associated with either the front or rear wheels allowing the same lawn-mower to be moved over the grass surface. The electric motor is disposed within the box-shaped body.

The motors are in turn powered by respective electric batteries which are rechargeable under conditions of non-use of the lawn-mower. The front wheels are smaller than the rear ones to allow a better mobility of the box-shaped body, and are pivoted on the body for freely rotating about a vertical axis. In this way, the box-shaped body can be handled about in any direction and also rotated to move the two driving wheels into rotation at different velocities.

The lawn-mowers further exhibit a cutting member consisting of at least one blade rotating between the front and rear wheels and disposed below the box-shaped body. The cutting blade, suitably shaped, is normally made up of a lamina of substantially star shape and driven into rotation by a respective electric motor about a vertical axis.

The electric motor of the cutting blade is also received within the box-shaped body and properly powered by a respective rechargeable electric battery.

Moreover, the blade can be adjustably moved away from/close to the grass surface to carry out cuts of different heights.

To improve the efficacy of the cut, the lawn-mowers may exhibit a plurality of cutting members suitably disposed to cover a larger cutting area.

The blades, located below the box-shaped body, are coplanar, parallel to the ground and lined-up transversally to the lawn-mower's feeding direction so as to sweep the whole front of advancement.

However, it may occur that the surface to be cut is not perfectly flat but presents instead depressions and rises.

Since the blades are located at the same distance from the ground, irregularities in the height of cut of the grass surface are likely to occur in the presence of different levels on the ground.

In this context, the technical task on which the present invention is based is to propose a lawn-mower able to overcomne the drawbacks of the above cited

### prior art.

In particular, the object of the present invention is to provide a lawn-mower able to ensure a constant height of cut over the whole grass surface, even in the presence of different levels on the ground.

The said technical task and specified object are substantially achieved by means of a lawn-mower comprising the technical characteristics disclosed in one or more of the appended claims.

Further characteristics and advantages of the present invention will appear more clearly by the indicative and thus non-limiting description of a preferred but non-exclusive embodiment of a lawn-mower, as illustrated in the accompanying drawings, wherein:
Fig. 1 is a perspective view of the lawn-mower according to the present invention; and
Fig. 2 is a plan view from below of the lawn-mower of Fig. 1.

With reference to the attached figures, numeral 1 indicates as a whole a lawn-mower according to the present invention.

It is stressed, that in the present description reference is made exclusively to an automatic lawn-mower, that is, a lawn-mower able to move autonomously over the grass surface to be cut without any manual intervention by an operator.

However, the present invention applies also to lawn-mowers of manual type, that is, those intended to be pushed and operated by a user.

The lawn-mower 1 comprises a box-shaped body 2 which, in the illustrated embodiment, is of substantially parallelepiped shape. Connected to the box-shaped body 2 is a plurality of wheels 3 allowing the lawn-mower 1 to be supported and handled. In particular, the lawn-mower comprises at least three rear driving wheels 3 coaxially disposed. Preferably, such wheels 3 are modular and each is made up of set of wheels 3a whose number changes according to the grip to be obtained.

The rear wheels 3 are associated at the bottom with the box-shaped body 2 so as to maintain the latter at a predetermined distance from the ground.

Suitable drive means (not shown in the attached figures) are associated with the box-shaped body 2 and held therein for driving the lawn-mower 1.

In the illustrated embodiment, the drive means comprise an electric motor connected to at least two coaxial wheels 3 and powered by a battery.

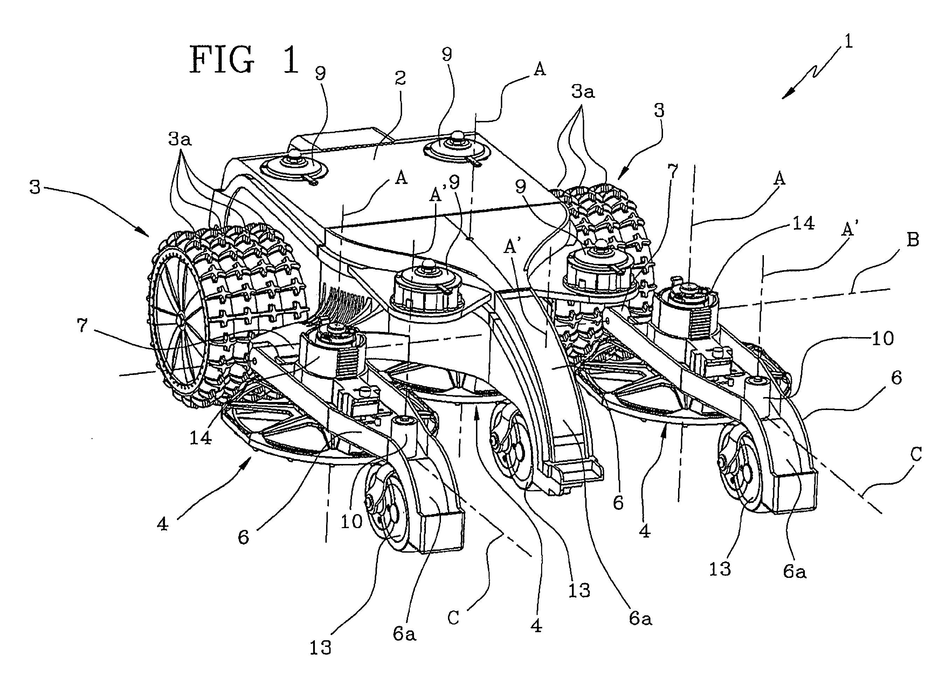

Shown in Fig. 1 are the contacts 9 through which the recharge of the batteries held in the box-shaped body 2 takes place.

In the case in which the lawn-mower 1 is of manual type, with the wheels 3 being not motor-driven, the drive means comprise advantageously a handle connected to the box-shaped body 2 so as to allow a user to drive the lawn-mower 1 manually.

Both the automatic and hand-operated lawn-mowers exhibit at least a cutting member 4 associated at the bottom thereof.

Advantageously, a plurality of cutting members, preferably in number of three, is provided.

Each cutting member 4 comprises at least a cutting blade 4a suitably star-shaped. Advantageously, for each cutting member 4 more than one cutting blade 4a are present overlapping each other and rotating out of phase.

As can be seen in the attached figures, a plurality of arms 6 extends away from the box-shaped body along respective axes C parallel to each other and oriented in the direction of advancement of the lawn-mower 1. Preferably, there are provided three arms 6, one disposed centrally and having the symmetry plane X of the lawn-mower passing therethrough, and the other two being disposed on opposite sides with respect to said symmetry plane X.

Each blade 4a is connected to a motor 14, of electric type for example, mounted on each arm 6.

At least one of the cutting members 4 is movable about at least one hinge axis B, orthogonal to the plane of symmetry X of lawn-mower 1, to follow any irregularity in the grass surface to be cut and to obtain a substantially uniform cut's height. In other words, the axis B is orthogonal to the direction of advancement of the lawn-mower and is, therefore, orthogonal to the axes A and C.

In greater detail, the arms 6, especially the side ones, are connected to the box-shaped body via a respective hinge 7 whose axis is the axis B. Consequently, it is the oscillation of side arms 6 about the axis B that makes the respective cutting members 4, connected to same arms, movable about such axis.

At least one non-motorized front wheel 13, which is able to rotate also about a respective vertical axis A' orthogonal to the resting plane of lawn-mower 1, is present.

The wheels 13 are positioned in correspondence of the free end 6a of each arm 6 and act as a front rest for the lawn-mower.

The adjustment of the cut's height is made by acting on a suitable device, such as a screw, for example, which allows the cutting member 4 to slide in the vertical direction and to move away from or close to the ground, thereby determining the height of the grass to be cut.

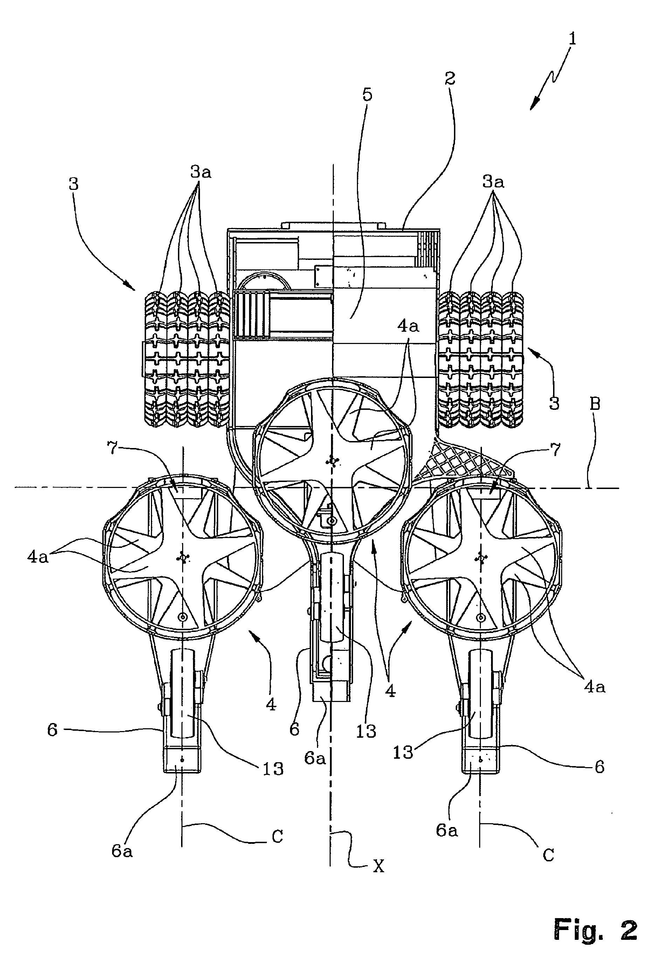

With reference to Fig. 2, the cutting member 4, in particular the blades 4a, cover cut regions which overlap at least partially to ensure that any region swept by the lawn-mower is mowed.

An alternative embodiment (not shown) provides for the side arms 6 to be hinged to a dual hinge so as to oscillate also about the respective axes C.

Advantageously, in the latter embodiment, the wheels 13 comprise a pair of wheels disposed on each oscillating arm 6 and connected to a pivoting T-shaped support so as to accommodate lateral as well as vertical disconnections of the ground.

In particular, this embodiment allows to better follow the pattern of the ground, both laterally and vertically, and to obtain a cut at a uniform height whatever the conformation of the grass surface to be cut.

Advantageously, the cutting member 4 comprises a rotating guard panel (not shown) associated with the cutting blade 4a. In detail, the guard panel is located between the cutting blade 4a and the bottom wall 5 of the box-shaped body 2, and has the function to prevent accumulations of cut grass between the blade 4a and box-shaped body 2, such occurrence being likely to cause a reduction of cut efficiency or even a malfunction of the lawn-mower, inasmuch as the accumulation of grass might interfere with the blades.

The invention achieves major advantages and the envisaged object.

In fact, the possibility for the arms to oscillate about a hinge axis orthogonal to the direction of advancement of the lawn-mower allows the latter to follow the conformation of the ground, and the blades to follow the outline of the ground suitably tilting in case of depressions and rises thereof.

In this way the height of the grass is kept constant in any point of the grass surface being cut.

The dual hinge, in addition, allows the side arms to oscillate about the axis parallel to the lawn-mower's direction of advancement thereby following the ground's pattern more efficiently, even laterally.

## Claims

1. Lawn-mower comprising:
- a box-shaped body (2) exhibiting a plurality of driving wheels (3) associated at the bottom with the same body (2) to drive it along a grass surface to be cut;
- means for driving said wheels (3) disposed within said box-shaped body (2); and
- a plurality of cutting members (4) associated at the bottom with the lawn-mower (1);
**characterized in that** at least one of said cutting members (4) is movable about at least one hinge axis (B) so as to follow the pattern of the grass surface to be cut and to keep the cutting height constant.

2. Lawn-mower according to claim 1, **characterized in that** said cutting members (4) are mounted below respective arms (6) extending away from the box-shaped body (2).

3. Lawn-mower according to claim 2, **characterized in that** two of said arms (6), each being located at a respective opposite side of said box-shaped body (2), are hinged at said hinge axis (B).

4. Lawn-mower according to any of the preceding claims, **characterized in that** said hinge axis (B) is disposed across the direction of advancement of the lawn-mower (1).

5. Lawn-mower according to any of the preceding claims, **characterized in that** it comprises at least three cutting members (4) so disposed as to cover cutting areas which are at least partially superimposed.

6. Lawn-mower according to claim 2, **characterized in that** said arms (6) develop along respective axes (C) parallel to each other and oriented in the direction of advancement of the lawn-mower (1).

7. Lawn-mower according to claim 6, **characterized in that** said arms (6) exhibit at the free end (6a) thereof at least one respective support wheel (13).

8. Lawn-mower according to claim 3, **characterized in that** said side arms (6) are hinged at a dual hinge so as to be able to oscillate about an axis (B) transverse to the direction of advancement of the lawn-mower (1), and an axis (C) parallel to the direction of advancement of the lawn-mower (1).

9. Lawn-mower according to any of the preceding claims, **characterized in that** the driving wheels (3) are of modular wheels so as to change the adhesion of the lawn-mower to the ground.
